# EUROPEAN PATENT SPECIFICATION

(11) **EP 3 387 638 B1**
(45) Date of publication and mention of the grant of the patent: **14.05.2025**
(21) Application number: 16822307.1
(22) Date of filing: 08.12.2016
(51) Int. Cl.: G09F 3/02, G09F 3/00, G09F 3/03, B65D 73/00, G06K 19/077, G09F 3/10

(54) **SELF ADHESIVE LABEL AND RFID INLAY**
SELBSTKLEBEETIKETT UND RFID-INLAY
ÉTIQUETTE AUTOCOLLANTE ET INCRUSTATION RFID

(30) Priority: 08.12.2015 US 201562264365 P; 22.12.2015 US 201562270631 P
(43) Date of publication of application: 17.10.2018
(73) Proprietor: Avery Dennison Retail Information Services LLC, Mentor, OH 44060 (US)
(72) Inventor: SEVAUX, Alain, 95300 Ennery (FR)
(74) Representative: Müller-Boré & Partner Patentanwälte PartG mbB
(86) International application number: PCT/US2016/065591
(87) International publication number: WO 2017/100435

(56) References cited:
- WO-A1-2006/045395
- WO-A1-2008/090714
- WO-A1-2011/161302
- DE-U1- 202011 003 520
- FR-A1- 2 703 573
- JP-A- 2006 276 389

## Description

### BACKGROUND

The present invention relates generally to the addition of a radio-frequency identification (RFID) transponder or other embedded trigger technology within a self-adhesive label hang tag assembly. The addition of the RFID transponder effectively integrates RFID directly into the label and then allows the label construction to be readily integrated with the packaging, such as garment packaging. The present subject matter is especially suitable for apparel items clothing, accessories such as belts, and other items. Accordingly, the present specification makes specific reference thereto. However, it is to be appreciated that aspects of the present inventive subject matter are also equally amenable to other like applications.

Radio frequency identification (RFID) tags are electronic devices that may be affixed to items whose presence is to be detected and/or monitored. The presence of an RFID tag, and therefore the presence of the item to which the RFID tag is affixed, may be checked and monitored by devices known as "readers" or "reader panels." Readers typically transmit radio frequency signals to which the RFID tags respond. Each RFID tag can store a unique identification number. The RFID tags respond to reader-transmitted signals by providing their identification number and additional information stored on the RFID tag based on a reader command to enable the reader to determine an identification and characteristics of an item.

Current RFID tags and labels are produced through the construction of an inlay which includes a chip connected to an antenna applied to a substrate. The inlay is then inserted into a single tag or label. These labels or tags are then printed by either conventional printing processes, such as flexographic processes, and then variable information may be printed either with the static information or singularly. The chips are then encoded in a printer which has a read/encoding device or separately by a reader/encoding device.

Another method of producing a RFID device directly on to a substrate, provides for the advancing of a substrate, coating the substrate with an adhesive and then deadening areas of the adhesive which will not be needed in connection with adhering the antenna to the substrate. Alternatively, the adhesive can be pattern coated on to the substrate in the shape and configuration of an antenna. Next, an aluminum or other metal foil is applied over the adhesive and adheres only in those areas were an exposed and tacky adhesive remains. The aluminum foil can be further cut such as through a rotary die cutter or laser cutting device to define the shape of the antenna and the remaining matrix of the aluminum is then removed allowing only the final antenna shape to be adhered to the substrate. A chip or strap is then applied over the contact ends of the antenna structure, such as with a dipole type antenna through the use of a conductive adhesive. A cover layer may be provided over the top of the chip or strap or alternatively over the entire area covered by the antenna.
Document JP 2006 276389 A discloses a medium to be printed comprising a sheet to be printed which is composed of a first area and a second area having a line-symmetrical shape with respect to a linear boundary line X and a third area adjacent to the second area; an inlet which has a non-contact IC circuit mounted on a substrate having almost the same shape as the first area and adheres to a rear face of the first area by an adhesive; a pasteboard temporarily stuck by an adhesive applied to rear faces of the second and third areas. The second and third areas are printed, and then the pasteboard is peeled, and the first and second areas are stuck to each other to prepare a label.
Document DE 20 2011 003520 U1 discloses a transponder label for attachment to an object, the transponder label comprising a substantially rectangular carrier section with two opposite longitudinal edges and two transverse edges extending transversely thereto, and a flat transponder being applied to a partial region of this carrier section, the carrier section having, on the side of the transponder, an adhesive layer covered by a removable protective film. Document FR 2 703 573 A1 discloses a labelling system for hanging utensils set out for sale on shop shelves, the system being characterised in that it consists of a label comprising two parts folded against each other and comprising an opening through which to insert the hook in order to display it on the display stand, and also a slot situated on the rear of the label to take the hook of the handle of the utensil on display. The two parts of the label are joined together by any known means such as staple, glue, adhesive tape, etc.
Document WO 2008/090714 A1 discloses dividing a display region into a first display region, a second display region and an RFID tag region and printing only in the first display region and the second display region. The RFID tag region is folded to the back surface of the first display region at a first fold line, and the second display region can be folded and laminated on the front surface of the RFID tag region at a second fold line.
WO 2011/161302 A1 describes a product that comprises a mounting hole or a preform for the mounting hole and a radio frequency identification transponder for wireless identification. Said transponder comprising at least an integrated circuit and wiring, wherein the wiring of the transponder at least partly encircles the mounting hole or the preform.

However, RFID inlays can be difficult to attach to the exterior of clothing, accessories, and other items. Further, the RFID inlays may become detached with rough handling, or deliberately removed. If the RFID inlays become removed, the clothing, accessories, and other items can no longer be tracked.

What is needed therefore is a label, with an RFID inlay incorporated into the label. Thus, the RFID inlay cannot be easily removed and/or separated from the article, clothing, accessories, or other items, etc., which allows the items to be easily tracked and inventoried.

The present invention discloses a label with an RFID inlay incorporated in the label. The label or substrate is folded over on itself, securing the RFID inlay within the folds and preventing the RFID inlay from being easily removed and/or separated from the item. The RFID inlay provides loss prevention and enables tracking of the items, as well as promotes other actions for the user.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

The claimed subject-matter is defined by a self-adhesive label according to claim 1 and a method of incorporating a RFID inly into a self-adhesive label according to claim 12. Disclosed herein, is a self-adhesive tag or label, such as a hang tag or "J" tag configuration incorporating embedded trigger technology, such as an RFID inlay. The tag or label can be manufactured in a flat form, similar to a standard self-adhesive label, using a low cost method, such as a roll to roll process. The tag or label substrate may be paper, cardstock, plastics such as PET, or other suitable materials. As the tag is initially supplied in a flat format it can be printed on using methods such as thermal transfer, inkjet or laser printing. In addition, the RFID device incorporated in the label may be programmed with information.

The self-adhesive tag or label comprises a hole for hanging the tag or label on a display rack. The RFID inlay is incorporated around the hole of the tag or label and secured within the fold of the tag or label when the tag or label is partially folded on itself.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed. Other advantages and features will become apparent from the following detailed description when considered in conjunction with the drawings.

### BRIEF DESCRIPTION OF THE DRAWINGS

FIG. 1 illustrates a perspective view of the label of the disclosed system in accordance with the disclosed architecture.
FIG. 2 illustrates a perspective view of the label and RFID inlay of the disclosed system in accordance with the disclosed architecture.
FIG. 3 illustrates a perspective view of the RFID inlay mounted onto the label with the release liner peeled back in accordance with the disclosed architecture.
FIG. 4 illustrates a perspective view of the label folded over on itself in accordance with the disclosed architecture.
FIG. 5 illustrates a perspective view of the label secured to a box in accordance with the disclosed architecture.
FIG. 6 illustrates a graph displaying the differences between the label being folded securing the RFID inlay within, and the label and RFID inlay being secured to an item in accordance with the disclosed architecture.

### DETAILED DESCRIPTIONOF THE INVENTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

The present invention discloses a self-adhesive tag or label incorporating embedded trigger technology, such as an RFID inlay. The label is manufactured of film material such as paper, cardstock, PET or corrugated material or the like that allows the label to be partially folded on itself so as to enclose and protect the RFID device and create an aperture for hanging the label when attached to a product. The sticky part of the label that is left out is then stuck to whatever packaging or product is to be labeled. The RFID inlay provides loss prevention and enables tracking of the items, as well as promotes other actions for the user.

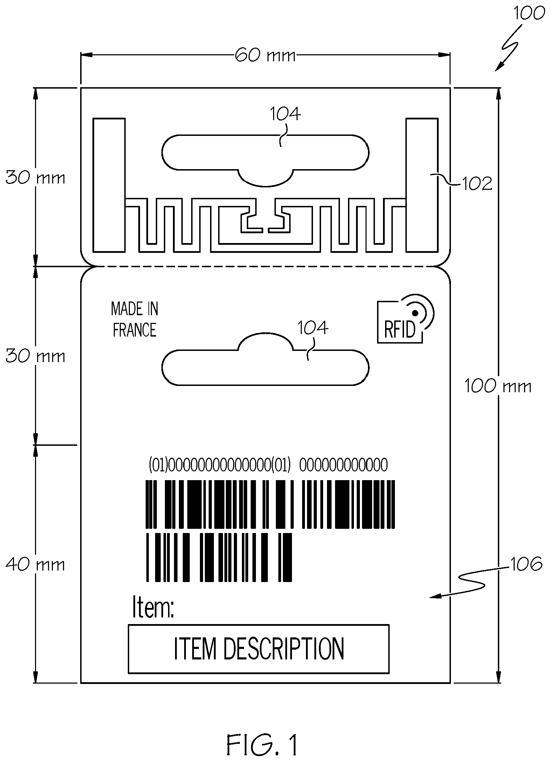

Referring initially to the drawings, FIG. 1 illustrates the label (or tag) 100 incorporating embedded trigger technology, such as an RFID inlay 102. The label or tag construction 100 is typically self-adhesive and manufactured of a stiff/rigid polyester material, paper, cardstock, plastics such as PET, or any other suitable materials that allows the label to fold on itself. The substrate has a top face with an adhesive layer adhered to the top face. The rigid or semi rigid material allows the label to be folded on itself, securing the RFID inlay 102 between the material folds. Typically, only the top portion of the label is folded on itself, leaving an adhesive, bottom (or sticky) section 106 which can be secured to an article or product to be labeled. Specifically, the label is generally 100mm in length and 60mm in width. Typically, 30mm of the 100mm overlap onto 30mm to secure the RFID inlay within the folds, leaving approximately 40mm of the label to be adhered to a product or item. The 40mm of the label that remains can also have additional indicia, labeling, barcodes, etc. printed on it.

The label 100 also comprises at least one opening or hole 104 that allows the label to be hooked to a display. The hole can be any suitable size and shape as is known in the art to help the label 100 be secured to a display. Typically, the RFID inlay 102 is positioned and secured around the hole 104 of the label 100. The RFID inlay 102 can be secured via any suitable method as is known in the art. Once secure, the label 100 is folded over on itself, securing the RFID inlay 102 within the folds and preventing the RFID inlay 102 from being easily removed and/or separated from the label 100.

The label or tag configuration of the present invention can be used in any number of applications. An exemplary embodiment is for use in the apparel field of use such as with garments or accessories. The present invention facilitates the packaging and display of the garment or accessories (e.g. socks, hosiery, underwear, scarves, belts or the like which can often be displayed from a vertical consumer display and suspended from hooks.

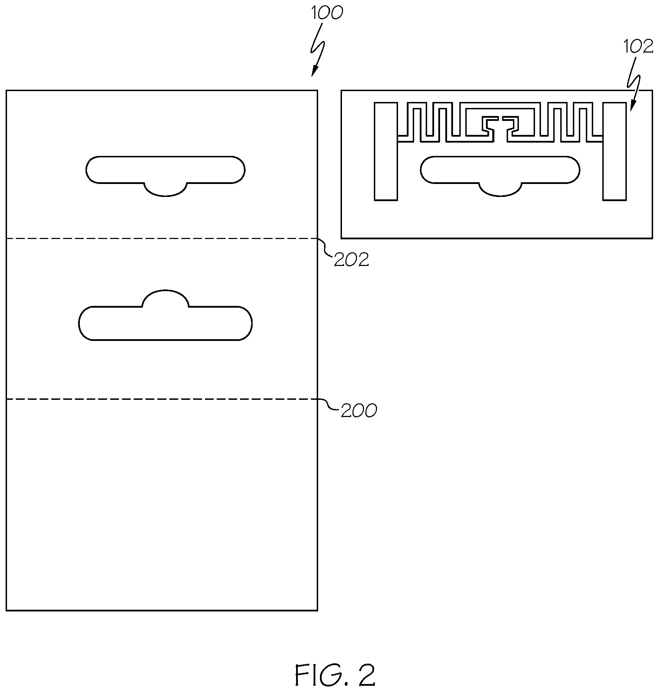

In a further embodiment, the chip of the RFID device can be encoded with information relating to the product that it will be connected with and then the substrate can be printed with high quality graphics or other information relating to the retailer, brand owner or manufacturer of the product. The printing may be done before or after the application of the RFID device. Referring generally to FIGS. 2-5, it is shown how the RFID inlay 102 is attached and secured to the label 100. Specifically, FIG. 2 discloses the label 100 cut by a CO2 laser or other suitable means for cutting the label 100. The label 100 is cut by the laser into a layer of adhesive ticket material, or other suitable material as is known in the art. An additional perforation 200 can also be added to help with manual alignment. The first perforation 202 is needed to allow the label 100 to be folded over on itself. For example, the label 100 is generally 100mm in length and 60mm in width. Typically, 30mm from the top 204 of the label 100 is positioned the first perforation 202. Thus, 30mm of the 100mm overlap onto 30mm to secure the RFID inlay 102 within the folds, leaving approximately 40mm of the label 100 to be adhered to a product or item.

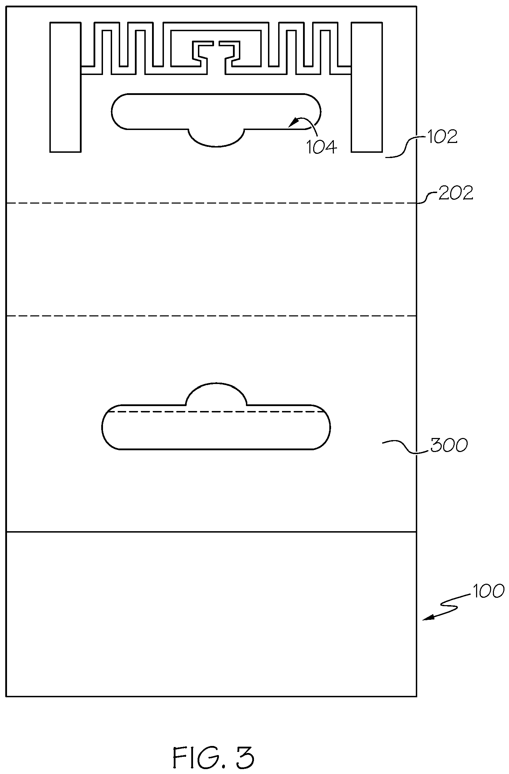

FIG. 3 discloses the RFID inlay 102 mounted onto the label 100. Typically, the label 100 also comprises any suitably sized and shaped hole 104 that allows the label to be hooked to a display. The RFID inlay 102 is positioned and secured around the hole 104 of the label 100. The RFID inlay 102 can be secured via any suitable method as is known in the art. Typically, the RFID inlay 102 is incorporated into an adhesive layer, and the release layer 300 of the adhesive layer is removed and the RFID inlay 102 is secured to the label 100, around the hole 104. Once secure, the label 100 is folded over on itself at the first perforation 202, securing the RFID inlay 102 within the folds and preventing the RFID inlay 102 from being easily removed and/or separated from the label 100.

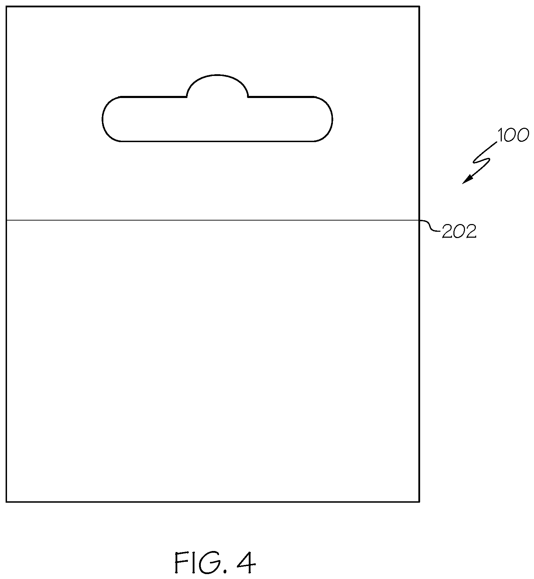

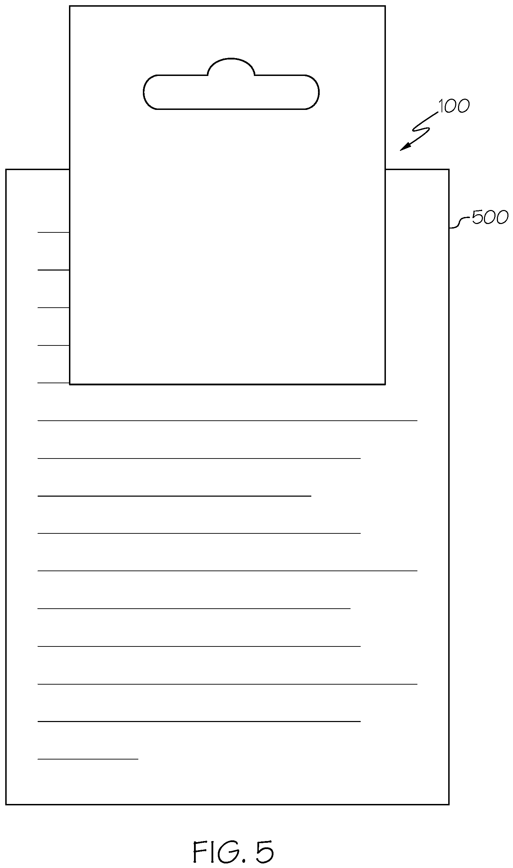

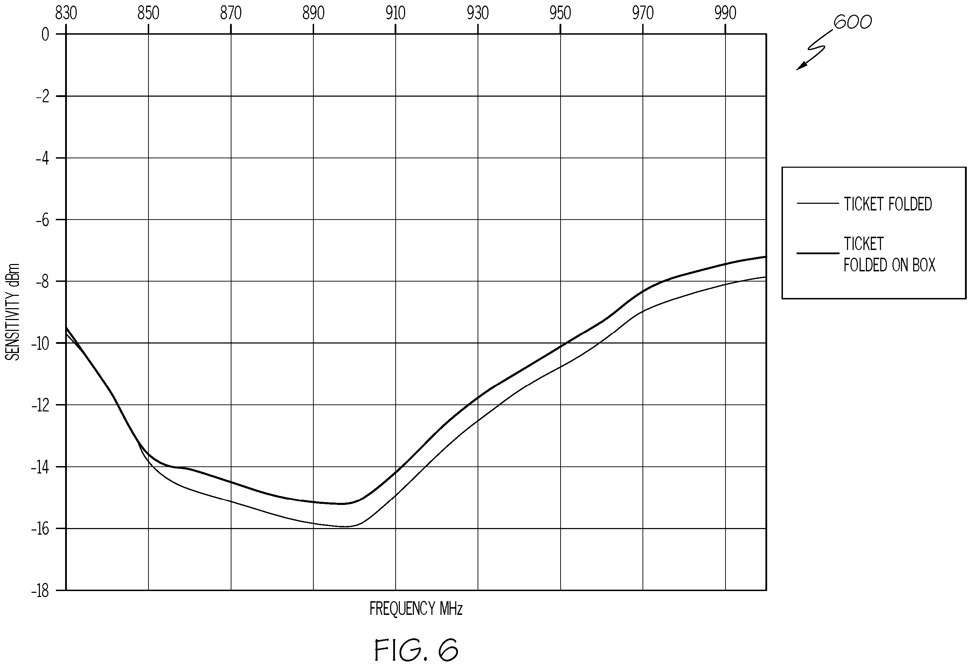

FIG. 4 discloses the label 100 folded over on itself at the first perforation 202, securing the RFID inlay 102 within the folds. FIG. 5 discloses the label 100 secured to a box 500, allowing the item (box 500) to be displayed. FIG. 6 discloses a graph 600 showing the differences between the label 100 being folded securing the RFID inlay 102 within, and the label 100 and RFID inlay 102 being secured to a box. Overall, the disclosure of wrapping the RFID inlay around a hole in a label displayed adequate performance. And, using a PET inlay would potentially strengthen the top of the label so it would be less likely to break off. Alternatively, the label (i.e., structure) could be made from a white PET. Furthermore, the label could be produced with a near field loop positioned near the top of the label hole, and a dipole element positioned near a second hole, which would form a long range RFID tag when folded.

The present invention contemplates that the label or tag presently set forth can be utilized not only for accessories, but also small boxed electronics and other potential media articles. For instance, with the label of the present invention if utilized with a belt, the amount of substrate utilized would be decreased. It is also contemplated that the label or tag presently set forth could be utilized I cooperation with a foil folded carton to allow for a RF connection.

## Claims

1. A self-adhesive label (100) incorporating an RFID inlay (102) comprising:
a substrate having a top face with an adhesive layer on the top face, the substrate having a top section and a bottom section (106), wherein the top section is folded on itself securing the RFID inlay (102) within the fold, wherein the folded top section has at least one opening (104) allowing the self-adhesive label (100) to be hooked to a display, wherein the RFID inlay (102) is incorporated around the at least one opening (104) in the folded top section, and the bottom section (106) is not folded on itself and is configured to be adhered to an article.

2. The label of claim 1, wherein the label (100) is manufactured of a rigid polyester or cardstock or paper.

3. The label of claim 1, wherein the bottom section (106) is adhered to a package or product.

4. The label of claim 1, wherein the substrate is a semi-rigid polyester.

5. The label of claim 1, wherein the label (100) is made using a Co2 laser.

6. The label of claim 1, wherein the RFID inlay (102) comprises a chip that is encoded with information relating to the article.

7. The label of claim 1, further comprising at least one set of perforations (200, 202).

8. The label of claim 7, comprising a first set of perforations (202) in the top section and a second set of perforations (200) in the bottom section (106).

9. The label of claim 8, wherein the first set of perforations (202) is 30 mm from the top perimeter of the label (100).

10. The label of claim 1, wherein the label (100) is used for a packaging for an accessory such as a socks, hosiery, underwear, scarves or belts.

11. The label of claim 1, wherein the substrate is printed with graphics or information relating to a retailer, brand owner, or manufacturer of the article.

12. A method of incorporating a RFID inlay (102) into a self-adhesive label (100) so as to obtain the self-adhesive label (100) of claim 1, comprising the steps of:
providing a substrate with an adhesive layer on its top face, the substrate comprising a top section and a bottom section (106),
cutting the substrate with a laser,
securing the RFID inlay (102) to the top section of the substrate by incorporating the RFID inlay (102) into the adhesive layer, and
folding the top section on itself so as to secure the RFID inlay (102) within the fold, the RFID inlay being incorporated around an opening of the folded top section so as to allow the self-adhesive label (100) to be hooked to a display via the opening (104).

13. The method of claim 12 further comprising:
cutting at least one set of perforations (202), and
preferably folding the top section on itself at the at least one set of perforations (202).

## Patentansprüche

1. Selbstklebendes Etikett (100), das ein RFID-Inlay (102) integriert, umfassend:
ein Substrat mit einer Oberseite mit einer Klebstoffschicht auf der Oberseite, wobei das Substrat einen oberen Abschnitt und einen unteren Abschnitt (106) aufweist, wobei der obere Abschnitt auf sich selbst gefaltet ist und das RFID-Inlay (102) innerhalb der Falte sichert, wobei der gefaltete obere Abschnitt mindestens eine Öffnung (104) aufweist, die es ermöglicht, das selbstklebende Etikett (100) an eine Anzeige anzubringen, wobei das RFID-Inlay (102) um die mindestens eine Öffnung (104) in dem gefalteten oberen Abschnitt integriert ist und der untere Abschnitt (106) nicht auf sich selbst gefaltet und so konfiguriert ist, dass er an einen Artikel geklebt werden kann.

2. Etikett nach Anspruch 1, wobei das Etikett (100) aus einem starren Polyester, Karton oder Papier hergestellt ist.

3. Etikett nach Anspruch 1, wobei der untere Abschnitt (106) auf eine Verpackung oder ein Produkt geklebt ist.

4. Etikett nach Anspruch 1, wobei das Substrat ein halbstarres Polyester ist.

5. Etikett nach Anspruch 1, wobei das Etikett (100) unter Verwendung eines Co2-Lasers gebildet wird.

6. Etikett nach Anspruch 1, wobei das RFID-Inlay (102) einen Chip umfasst, der mit Informationen in Bezug auf den Artikel codiert ist.

7. Etikett nach Anspruch 1, ferner umfassend mindestens einen Satz von Perforationen (200, 202).

8. Etikett nach Anspruch 7, umfassend einen ersten Satz von Perforationen (202) in dem oberen Abschnitt und einen zweiten Satz von Perforationen (200) in dem unteren Abschnitt (106).

9. Etikett nach Anspruch 8, wobei der erste Satz von Perforationen (202) 30 mm von dem oberen Umfang des Etiketts (100) entfernt ist.

10. Etikett nach Anspruch 1, wobei das Etikett (100) für eine Verpackung für ein Accessoire, wie etwa Socken, Strümpfe, Unterwäsche, Schals oder Gürtel, verwendet wird.

11. Etikett nach Anspruch 1, wobei das Substrat mit Grafiken oder Informationen in Bezug auf einen Einzelhändler, Markeninhaber oder Hersteller des Artikels bedruckt ist.

12. Verfahren zum Integrieren eines RFID-Inlays (102) in ein selbstklebendes Etikett (100), um das selbstklebende Etikett (100) nach Anspruch 1 zu erhalten, umfassend die folgenden Schritte:
Bereitstellen eines Substrats mit einer Klebstoffschicht auf dessen Oberseite, wobei das Substrat einen oberen Abschnitt und einen unteren Abschnitt (106) umfasst,
Schneiden des Substrats mit einem Laser,
Sichern des RFID-Inlays (102) an dem oberen Abschnitt des Substrats durch Integrieren des RFID-Inlays (102) in die Klebstoffschicht, und
Falten des oberen Abschnitts auf sich selbst, um das RFID-Inlay (102) innerhalb der Falte zu sichern, wobei das RFID-Inlay um eine Öffnung des gefalteten oberen Abschnitts integriert wird, um zu ermöglichen, dass das selbstklebende Etikett (100) über die Öffnung (104) an eine Anzeige angebracht werden kann.

13. Verfahren nach Anspruch 12, ferner umfassend:
Schneiden mindestens eines Satzes von Perforationen (202), und
vorzugsweise Falten des oberen Abschnitts auf sich selbst an dem mindestens einen Satz von Perforationen (202).

## Revendications

1. Etiquette autocollante (100) intégrant une incrustation RFID (102) comprenant :
un substrat présentant une face supérieure avec une couche adhésive sur la face supérieure, le substrat présentant une section supérieure et une section inférieure (106), dans laquelle la section supérieure est pliée sur elle-même fixant ainsi l'incrustation RFID (102) à l'intérieur du pli, dans laquelle la section supérieure pliée présente au moins une ouverture (104) permettant à l'étiquette autocollante (100) d'être accrochée à un système d'affichage, dans laquelle l'instruction RFID (102) est intégrée autour de l'au moins une ouverture (104) dans la section supérieure pliée, et la section inférieure (106) n'est pas pliée sur elle-même et est configurée pour être collée à un article.

2. Etiquette selon la revendication 1, dans laquelle l'étiquette (100) est fabriquée à partir d'un polyester rigide ou de carton ou de papier.

3. Etiquette selon la revendication 1, dans laquelle la section inférieure (106) est collée à un emballage ou à un produit.

4. Etiquette selon la revendication 1, dans laquelle le substrat est un polyester semi-rigide.

5. Etiquette selon la revendication 1, dans laquelle l'étiquette (100) est réalisée en utilisant un laser Co2.

6. Etiquette selon la revendication 1, dans laquelle l'incrustation RFID (102) comprend une puce qui est codée avec des informations concernant l'article.

7. Etiquette selon la revendication 1, comprenant en outre au moins un ensemble de perforations (200, 202).

8. Etiquette selon la revendication 7, comprenant un premier ensemble de perforations (202) dans la section supérieure et un deuxième ensemble de perforations (200) dans la section inférieure (106).

9. Etiquette selon la revendication 8, dans laquelle le premier ensemble de perforations (202) est de 30 mm depuis le périmètre supérieur de l'étiquette (100).

10. Etiquette selon la revendication 1, dans laquelle l'étiquette (100) est utilisée pour un emballage pour un accessoire tel que des chaussettes, de la bonneterie, des sous-vêtements, des écharpes ou des ceintures.

11. Etiquette selon la revendication 1, dans laquelle le substrat est imprimé avec des graphiques ou des informations concernant un revendeur, un propriétaire de marque ou un fabricant de l'article.

12. Procédé d'intégration d'une incrustation RFID (102) dans une étiquette autocollante (100) de manière à obtenir l'étiquette autocollante (100) selon la revendication 1, comprenant les étapes de :
fourniture d'un substrat avec une étiquette adhésive sur sa face supérieure, le substrat comprenant une section supérieure et une section inférieure (106),
découpe du substrat avec un laser,
fixation de l'incrustation RFID (102) sur la section supérieure du substrat en intégrant l'incrustation RFID (102) dans l'étiquette adhésive, et
pliage de la section supérieure sur elle-même de manière à fixer l'incrustation RFID (102) à l'intérieur du pli, l'incrustation RFID étant intégrée autour d'une ouverture de la section supérieure pliée de manière à permettre à l'étiquette autocollante (100) d'être accrochée à un système d'affichage par l'intermédiaire de l'ouverture (104).

13. Procédé selon la revendication 12, comprenant en outre :
la découpe d'au moins un ensemble de perforations (202), et
préférence le pliage de la section supérieure sur elle-même sur l'au moins un ensemble de perforations (202).
